(19) **Europäisches Patentamt**
**European Patent Office**
**Office européen des brevets**

(11) **EP 0 965 770 B2**

(12) **NOUVEAU FASCICULE DE BREVET EUROPEEN**
Après la procédure d'opposition

(45) Date de publication et mention de la décision concernant l'opposition:
**17.06.2009 Bulletin 2009/25**

(45) Mention de la délivrance du brevet:
**08.03.2006 Bulletin 2006/10**

(21) Numéro de dépôt: **99111495.0**

(22) Date de dépôt: **14.06.1999**

(51) Int Cl.:
*F16D 69/02* (2006.01)   *C08J 5/24* (2006.01)
*B29B 15/12* (2006.01)

(54) **Procédé de fabrication d'un matériau de friction et plus particulièrement d'une couronne de friction pour disque de friction d'embrayage.**

Verfahren zur Herstellung eines Reibmaterials insbesondere für den Reibungsring einer Kupplungsscheibe.

Method of fabrication of a friction material and in particular of a friction ring for a friction disc of a clutch.

(84) Etats contractants désignés:
**DE ES GB IT**

(30) Priorité: **17.06.1998 FR 9807657**

(43) Date de publication de la demande:
**22.12.1999 Bulletin 1999/51**

(73) Titulaire: **Valeo Matériaux de Friction**
**87020 Limoges cedex 9 (FR)**

(72) Inventeur: **Biot, Christian**
**87410 Le Palais sur Vienne (FR)**

(74) Mandataire: **Cabinet Plasseraud**
**52, rue de la Victoire**
**75440 Paris Cedex 09 (FR)**

(56) Documents cités:
EP-A- 0 010 956      EP-A- 0 063 453
BG-A- 2 096 654      DE-A- 2 833 289
DE-A- 3 813 753      DE-A- 4 221 001
FR-A- 2 379 563      FR-A- 2 379 563
GB-A- 2 203 746      GB-A- 2 203 746
JP-A- 07 062 329      US-A- 3 743 069
US-A- 4 118 528      US-A- 4 118 528
US-A- 4 476 191      US-A- 4 476 191

• Wikipedia "Alkalilauge"
• article '"Puffer"'
• Wikipedia "Puffer"

**Description**

La présente invention concerne un procédé de fabrication d'un matériau de friction et plus particulièrement d'une couronne de friction pour disque de friction d'embrayage.

Une telle couronne de friction est réalisée à partir de fil à base notamment de fibres minérales telles que des fibres de verre, qui assurent la résistance à la force centrifuge, de caoutchouc pour l'obtention d'un bon coefficient de frottement, de charges diverses et d'un liant, en pratique une résine phénolique, pour rendre le tout cohérent.

Lors de la fabrication de la couronne il est usuel d'utiliser des solvants, en particulier pour dissoudre le caoutchouc.

Ces solvants sont des solvants chlorés qui présentent l'inconvénient d'être nocifs et de nécessiter, par conséquent, la mise en place d'opérations de confinement et de récupération afin d'éviter tout contact avec les opérateurs et tout rejet dans l'atmosphère.

On a déjà proposé d'utiliser des solvants aqueux en remplacement des solvants chlorés. Ceci nécessite d'utiliser du latex plutôt que de caoutchouc.

En pratique un ciment aqueux est réalisé qui résulte du mélange dans de l'eau de résines phénoliques, de charges et de latex. Ce ciment est ensuite utilisé pour imprégner un fil constitué de fibres minérales et autres qui sert à former une ébauche cuite ensuite sous pression pour former une couronne de friction.

La demanderesse a constaté que le ciment aqueux présente une viscosité qui augmente rapidement au cours du temps. Cela a pour conséquences, d'une part, une courte durée pendant laquelle le ciment est utilisable et, d'autre part, des variations dans les caractéristiques de frottement et de résistance à l'usure des couronnes de frottement ensuite réalisées.

La présente invention a pour objet un procédé de fabrication d'un matériau de friction et plus particulièrement d'une couronne de friction pour disque de friction d'embrayage utilisant un ciment aqueux qui ne présente pas les inconvénients précités.

Le procédé selon l'invention, ressort de la revendication 1.

Selon d'autres caractéristiques de l'invention pouvant être prises séparément ou dans toutes leurs combinaisons techniquement possibles :

- le phénolate est une phénolate alcalin ;
- la résine phénolique du type novolaque sous forme de poudre ;
- la base forte est de la potasse ;
- la base forte est de la soude ;
- la proportion pondérale de base forte par rapport à la résine phénolique du type novolaque est comprise de préférence entre 8 et 15 %.

On a pu constater que, grâce à l'invention, la durée pendant laquelle le ciment peut être utilisé pour réaliser l'imprégnation du fil servant à constituer le squelette et l'ébauche de la couronne, est considérablement augmenté : il se trouve multiplié par un facteur de l'ordre de 10.

De plus, on note urve stabilité des caractéristiques physico-chimiques du ciment pendant tout le temps d'utilisation, ce qui a pour conséquence avantageuse une qualité améliorée et constante du produit final, c'est-à-dire de la couronne de frottement.

Des analyses approfondies ont pu mettre en évidence qu'avec les procédés de l'état de la technique, l'adjonction de résine phénolique en poudre du type novolaque dans le mélange contenant du latex provoque l'absorption de l'eau de constitution du latex, conduisant à une augmentation rapide de la viscosité et rendant impropre le ciment pour l'imprégnation d'un fil.

L'utilisation de résine du type novolaque sous forme de phénolate ou l'adjonction d'une base forte susceptible de transformer une partie au moins de la resine du type novolaque en phénolate, selon l'invention, permet d'éviter les problèmes indiqués ci-dessus rencontrés dans l'état de la technique.

D'autres caractéristiques et avantages de l'invention apparaîtrons dans la description d'exemples de mise en oeuvre de l'invention.

Des couronnes pour disque de friction d'embrayage à frottement à sec, destiné à un véhicule automobile, sont réalisées comme indiqué ci-après.

Un ciment aqueux est réalisé en mélangeant divers constituants. De préférence, le mélange est effectué en deux étapes.

Un pré-mélange est tout d'abord constitué en mélangeant des charges, des résines phénolique du type novolaque et mélamine-formol, de la potasse (ou, en variante, de la soude ou une autre base forte) et de l'eau. Le temps du mélangeage est déterminé de manière qu le mélange soit homogène et que la résine phénolique du type novolaque soit entièrement dissoute.

Pour former le mélange final, du latex est introduit dans le pré-mélange en faisant en sorte d'obtenir un mélange homogène.

Un fil constitué à base de fibres minérales, telles que des fibres de verre, de fibres organiques, telles que des fibres de polyacrylonitrile ou dérivées, et de fils métalliques dont la teneur peut aller jusqu'à 75 % du poids de la couronne est plongé dans le ciment pour en être imprégné.

Le fil imprégné est ensuite séché.

Une ébauche de couronne de friction est obtenue en distribuant le fil imprégné en lobes entre un diamètre extérieur et un diamètre intérieur.

L'ébauche subit ensuite une cuisson sous pression.

Une post-cuisson est avantageusement prévue pour stabiliser le produit.

Des usinages divers tels que rectifications, perçages, ainsi qu'ensuite un traitement anti-poussière, sont réalisés.

Des couronnes ainsi obtenues sont destinées à être montées de part et d'autre d'un support à élasticité axiale d'un disque de friction d'embrayage.

De manière plus précise, quatre échantillons de ciment sont réalisés comme indiqué ci-dessus, à partir des composants ci-dessous dont les proportions sont exprimées en parties en poids.

| MATIERES PREMIERES PARTIES EN POIDS | MELANGE 1 (Témoin) | MELANGE 2 | MELANGE 3 | MELANGE 4 |
|---|---|---|---|---|
| Novolaque en poudre | 100 | 100 | 100 | 100 |
| Potasse caustique | 0 | 6 | 10 | 15 |
| Latex SBR | 200 | 200 | 200 | 200 |
| Résine de mélamine formol | 220 | 220 | 220 | 220 |
| Noir de carbone | 90 | 90 | 90 | 90 |
| Soufre | 53 | 53 | 53 | 53 |
| Sulfate de baryum | 140 | 140 | 140 | 140 |
| Eau totale du mélange (eau additionnelle + eau du latex | 335 | 450 | 515 | 515 |

Des mesures de l'évolution de la viscosité des mélanges sont réalisées sur des extraits de ceux-ci, au moyen d'un viscomètre « Brookfield », à une température de 25°C.

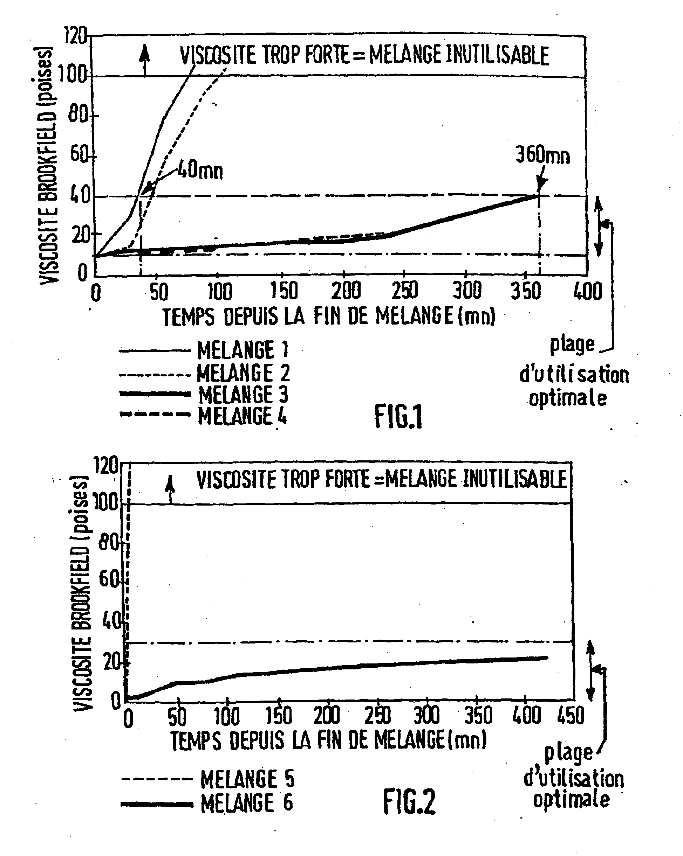

Les mesures d'évolution de la viscosité au cours du temps sont reportées sur les graphiques de la figure 1.

Sachant qu'en pratique une imprégnation correcte d'un fil du type indiqué précédemment est obtenu avec un ciment dont la viscosité est inférieure à 100 poises et de manière optimum à 40 poises, on constate sur les graphiques de la figure 1 que la durée d'utilisation du mélange 1, comptée à partir de la constitution de celui-ci, qui est un mélange témoin réalisé conformément à l'état de la technique, c'est-à-dire en utilisant une résine phénolique du type novolaque et sans apport de base forte, une durée d'utilisation très courte, inférieure à 80 mn alors que pour les mélanges 2 à 3 la durée d'utilisation est portée au-delà de 100 mn et même, pour les mélanges 3 et 4, la viscosité reste dans sa plage optimum (inférieure à 40 poises) après 360 mn.

Des tests complémentaires, non relatés ici, ont permis de définir une plage préférée correspondant à un pourcentage pondéral de la base forte par rapport à la résine compris entre 8 et 15 % permettant au mélange constituant le ciment d'atteindre un pH de l'ordre de 9 à 10.

Pour certaines applications on préfère utiliser du latex de type NBR qui présente une plus grande résistance thermique que le latex de type SBR.

En réalisant deux échantillons (n° 5 et n° 6) ayant les formulations suivantes :

| MATIERES PREMIERES (PARTIES EN POIDS) | MELANGE 5 (témoin) | MELANGE 6 |
|---|---|---|
| Novolaque en poudre | 100 | 100 |
| Potasse caustique | 0 | 10 |
| Latex NBR | 103 | 103 |
| Résine de mélamine formol | 83 | 83 |

(suite)

| MATIERES PREMIERES (PARTIES EN POIDS) | MELANGE 5 (témoin) | MELANGE 6 |
|---|---|---|
| Noir de carbone | 36 | 36 |
| Soufre | 10 | 10 |
| Sulfate de baryum | 70 | 70 |
| Eau total du mélange (eau additionnelle + eau du latex) | 280 | 350 |

On peut mettre en évidence l'intérêt encore plus spectaculaire de l'invention.

En effet, en se reportant aux courbes de la figure 2, représentant à une température de 25°C l'évolution de la viscosité des mélanges 5 et 6 en fonction du temps mesuré à compter de la fin de la réalisation des mélanges, on constate que la prise en masse du mélange 5 (sans présence de base forte) est quasi instantanée alors que le mélange 6 est utilisable dans les conditions optimum de viscosité pendant plus de 7 heures.

L'intérêt de l'utilisation d'un latex du type NBR est illustré par les exemples comparatifs ci-après.

On réalise deux ciments en réalisant les mélanges 7 et 8 suivants dont les compositions pondérales sont identiques, la seule différence résidant dans la nature du latex.

| COMPOSITION MASSIQUE | MELANGE 7 | MELANGE 8 |
|---|---|---|
| Novolaque | 13 | 13 |
| Potasse caustique | 1.3 | 1.3 |
| Mélamine/formol | 27 | 27 |
| Latex SBR | 24 | - |
| Latex NBR | - | 24 |
| Soufre | 6.2 | 6.2 |
| Noir de carbone | 11 | 11 |
| Sulfate de baryum | 17.5 | 17.5 |

Puis on réalise deux paires de couronnes d'embrayage à partir d'un fil imprégné d'un ciment correspondant respectivement aux mélanges 7 et 8.

Chaque paire équipe un disque de friction d'embrayage.

Les disques d'embrayages sont testés sur un banc d'essai permettant de les soumettre à une succession d'opérations d'embrayages/débrayages à intervalles réguliers.

Les valeurs de la température des couronnes, de leur coefficient de frottement et le nombre d'opérations d'embrayages sont mesurées.

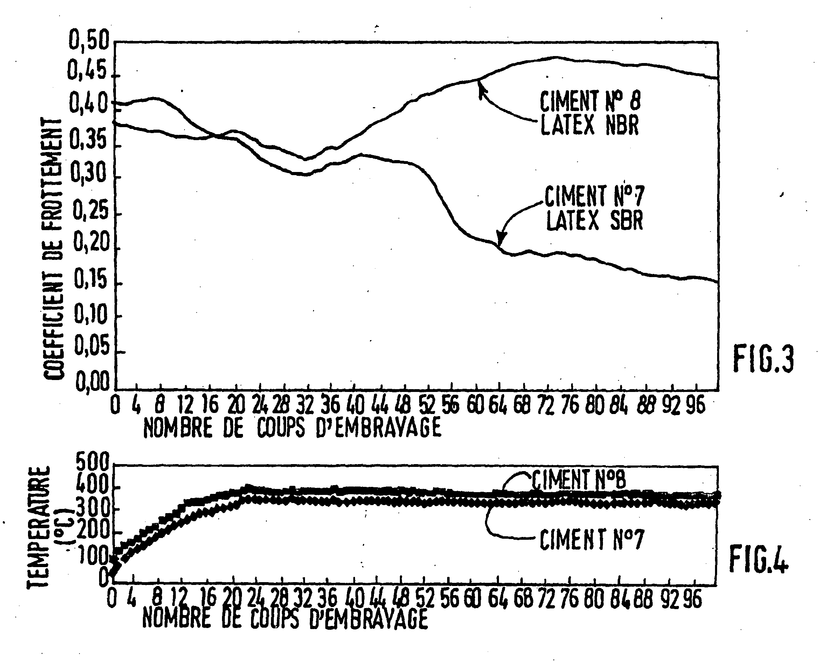

Les mesures sont reportées sur les graphiques des figures 3 et 4.

On constate que les opérations d'embrayages répétées provoquent un échauffement qui se stabilise autour de 350-400°C et que le coefficient de frottement des couronnes contenant du latex SBR diminue régulièrement puis fortement après une cinquantaine d'opérations d'embrayage, alors que pour les couronnes contenant du latex NBR, le coefficient de frottement est stable et même augmente après une quarantaine d'opérations d'embrayage.

Par ailleurs on constate, au cours des opérations d'embrayage, très peu de phénomènes de broutement dans le cas des garnitures comprenant du latex NBR, nettement moins que pour les autres garnitures comprenant du latex SBR.

Par ailleurs, on a pu constater que l'invention autorise une grande latitude de formulation de la composition du ciment en vue de conférer au matériau de friction finalement réalisé diverses propriétés intéressantes.

Celles-ci permettent de couvrir une palette de caractéristiques et performances particulièrement intéressantes des couronnes réalisées conformément à l'invention.

A titre d'exemples, les compositions correspondant aux formulations F1 à F7 ci-dessous sont particulièrement intéressantes.

| MATIERES PREMIERES | COMPOSITIONS (% POIDS) | | | | | | |
|---|---|---|---|---|---|---|---|
| | F1 | F2 | F3 | F4 | F5 | F6 | F7 |
| Novolaque | 21 | 13 | 24 | 24 | 18.6 | 19.5 | 24 |
| Potasse | 2.1 | 1.3 | 2.5 | 2.5 | 1.9 | 2 | 2.4 |
| Mélamine-formol | 25 | 27 | 20 | 20 | 15.5 | 16 | 8 |
| Latex principaux SBR ou NBR | 21 | 24 | 25 | 20 | 19.5 | 20 | 34 |
| Latex secondaires : halobutyls, NR, vinylpyridine | | | | 5 | | | |
| Noir de carbone | 11 | 11 | 9 | 9 | 7 | 7 | 10.5 |
| Soufre | 2.4 | 6.2 | 2.5 | 2.5 | 2 | 2 | 3.6 |
| Accélérateurs | | | | | | 0,5 | |
| Sulfate de baryum | 17.5 | 17.5 | 17 | 17 | 13 | 14 | 17,5 |
| Kaolin | | | | | 7 | | |
| Graphite | | | | | 7 | | |
| Cardolite | | | | | | 3 | |
| Silicate de calcium | | | | | 3.1 | | |
| Mica | | | | | | 3 | |
| Oxydes de fer | | | | | | 3 | |
| Zircon | | | | | | 1 | |
| Sulfure d'antimoine | | | | | 3.1 | | |
| Fluorine | | | | | 2.3 | | |
| Cabonate de calcium | | | | | | 4 | |
| Silicate de magnésium | | | | | | 2.5 | |
| Coke de pétrole | | | | | | 2.5 | |

L'invention permet, en outre, de réaliser et d'utiliser des ciments comprenant une plus grande proportion de constituants utiles par rapport au solvant ; ceci peut se mesurer en réalisant des extraits secs dont la valeur dépasse 50 % du poids de ciment contre 35 % et moins selon l'état de la technique.

Les avantages selon l'invention sont, d'une part, une imprégnation plus riche du fil et, d'autre part, un séchage plus rapide de celui-ci après imprégnation.

L'invention permet avantageusement l'imprégnation d'un fil composite comprenant au moins un fil de verre élémentaire texture (de préférence de 1 à 3 fils texturés de 600 à 5000 tex). Avec le ciment réalisé selon l'invention, on obtient avec ce type de fil une meilleure imprégnation qui a pour conséquence une plus grande résistance de la couronne d'embrayage, réalisée à partir d'un tel fil imprégné, aux effets de la force centrifuge.

Afin d'effectuer des comparaisons, on réalise trois couronnes d'embrayage dotées de perçages destinés à leur fixation sur un disque d'embrayage, par rivetage.

La première est formée à partir d'un matériau classique, c'est-à-dire d'un fil non texturé imprégné par un ciment dans un solvant chloré.

La deuxième est réalisée à partir d'un fil non texturé imprégné par un ciment conforme au mélange 3 précédent.

La troisième est réalisée à partir d'un fil composite comprenant 2 fils texturés de 2500 tex imprégnés par un ciment conforme au mélange 3 précédent.

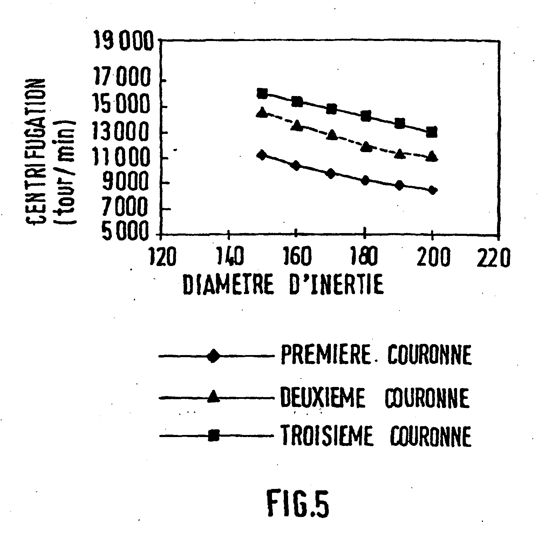

Les graphiques de la figure 5 montrent les seuils de rupture (tours/mn) à chaud des couronnes percées en fonction de leur diamètre d'inertie. On rappelle que celui-ci, DI, est donné par la formule

$$DI = \sqrt{\frac{Dext^2 - d\,int^2}{2}}$$

où Dext et dint sont respectivement les diamètres extérieur et intérieur de la couronne.

On peut constater que l'invention améliore notablement la résistance à la centrifugation et que celle-ci est particulièrement importante en combinant fil texturé et ciment aqueux basique.

En combinant cette disposition avec l'utilisation de latex NBR on cumule tous les avantages précités.

## Revendications

1. Procédé de fabrication d'un matériau de friction, pour une couronne de friction pour disque de friction d'embrayage travaillant à sec, comportant une opération d'imprégnation d'un fil à base notamment de fibres minérales telles que des fibres de verre, au moyen d'un ciment d'imprégnation aqueux contenant du latex et une résine phénolique, **caractérisé en ce que,** la résine phénolique est du type novolaque et est au moins en partie sous forme de phénolate, une base forte étant ajoutée au ciment d'imprégnation avant ou après adjonction de résine phénolique, la proportion pondérale de base forte par rapport à la résine phénolique étant comprise entre 6% et 15%.

2. Procédé selon la revendication 1, **caractérisé en ce que** la proportion pondérale de base forte par rapport à la résine phénolique est comprise entre 8 et 15%.

3. Procédé selon la revendication 1 ou 2, **caractérisé en ce que** la base forte est de la potasse.

4. Procédé selon la revendication 1 ou 2, **caractérisé en ce que** la base forte est de la soude.

5. Procédé selon l'une des revendications 1 à 4, **caractérisé en ce que** la réalisation du ciment d'imprégnation comporte la formation d'un pré-mélange comprenant des charges, de la résine phénolique, de la base forte et de l'eau et l'adjonction à ce pré-mélange de latex.

6. Procédé selon la revendication 45, **caractérise en ce que** le latex est du latex de type SBR.

7. Procédé selon la revendication 45, **caractérisé en ce que** le latex est du latex de type NBR.

8. Procédé selon la revendication 7 ou 8, **caractérisé en ce que** le pH du ciment aqueux est de l'ordre de 9 à 10.

9. Procédé selon l'une des revendications 1 à 8, **caractérisé en ce que** le fil comporte au moins un fil de verre élémentaire texturé.

10. Procédé selon la revendication 79, **caractérisé en ce que** la texture du fil de verre texture est de 600 à 5000 tex.

11. Procédé selon l'une des revendications 1 à 10, **caractérisé en ce que** le fil comprend du fil métallique.

## Claims

1. Method of fabricating a friction material for a friction ring for a clutch friction disc working dry, comprising an operation of impregnating a thread based in particular on mineral fibres such as glass fibres, by means of an aqueous impregnation cement containing latex and a phenolic resin, **characterised in that** the phenolic resin is of the Novolac type and is at least partly in the form of phenolate, a strong base being added to the impregnation cement before or after the addition of phenolic resin, the proportion by weight of the strong base with respect to the phenolic resin being between 6% and 15%.

2. Method according to claim 1, **characterised in that** the proportion by weight of strong base with respect to the phenolic resin is between 8% and 15%.

3. Method according to claim 1 or 2, **characterised in that** the strong base is potash.

4. Method according to claim 1 or 2, **characterised in that** the strong base is soda.

5. Method according to one of claims 1 to 4, **characterised in that** the production of the impregnation cement comprises the formation of a premixture comprising fillers, phenolic resin, strong base and water and the addition of latex to this premixture.

6. Method according to claim 5, **characterised in that** the latex is latex of the SBR type.

7. Method according to claim 5, **characterised in that** the latex is latex of the NBR type.

8. Method according to claim 6 or 7, **characterised in that** the pH of the aqueous cement is around 9 to 10.

9. Method according to one of claims 1 to 8, **characterised in that** the thread comprises at least one textured elementary glass thread.

10. Method according to claim 9, **characterised in that** the texture of the textured glass thread is 600 to 5,000 tex.

11. Method according to one of claims 1 to 10, **characterised in that** the thread comprises metallic thread.


**Patentansprüche**

1. Verfahren zur Herstellung eines Reibmaterials, für einen Reibungsring für eine mit Trockenreibung arbeitende Reibungskupplungsscheibe, das einen Vorgang zur Imprägnierung eines Garns insbesondere auf der Basis von Mineralfasern, wie etwa Glasfasern, mittels eines wässrigen Imprägnierkitts umfasst, der Latex und ein Phenolharz enthält, **dadurch gekennzeichnet, dass** das Phenolharz ein Harz des Typs Novolak ist und wenigstens teilweise in Phenolat-Form vorliegt, wobei dem Imprägnierkitt vor oder nach dem Zusatz von Phenolharz eine starke Base zugesetzt wird, wobei der Gewichtsanteil der starken Base bezogen auf das Phenolharz zwischen 6 und 15 % enthalten ist.

2. Verfahren nach Anspruch 1, **dadurch gekennzeichnet, dass** der Gewichtsanteil der starken Base bezogen auf das Phenolharz zwischen 8 und 15 % enthalten ist.

3. Verfahren nach Anspruch 1 oder 2, **dadurch gekennzeichnet, dass** es sich bei der starken Base um Kali handelt.

4. Verfahren nach Anspruch 1 oder 2, **dadurch gekennzeichnet, dass** es sich bei der starken Base um Soda handelt.

5. Verfahren nach einem der Ansprüche 1 bis 4, **dadurch gekennzeichnet, dass** die Herstellung des Imprägnierkitts die Bildung einer Vormischung, die Füllstoffe, Phenolharz, starke Base und Wasser enthält, und den Zusatz von Latex zu dieser Vormischung umfasst.

6. Verfahren nach Anspruch 5, **dadurch gekennzeichnet, dass** es sich bei dem Latex um Latex des Typs SBR handelt.

7. Verfahren nach Anspruch 5, **dadurch gekennzeichnet, dass** es sich bei dem Latex um Latex des Typs NBR handelt.

8. Verfahren nach einem der Ansprüche 6 oder 7, **dadurch gekennzeichnet, dass** der pH-Wert des wässrigen Kitts in der Größenordnung 9 bis 10 liegt.

9. Verfahren nach einem der Ansprüche 1 bis 8, **dadurch gekennzeichnet, dass** das Garn wenigstens eine texturierte Elementar-Glasfaser enthält.

10. Verfahren nach Anspruch 9, **dadurch gekennzeichnet, dass** die Textur der texturierten Glasfaser 600 bis 5000 Tex beträgt.

11. Verfahren nach einem der Ansprüche 1 bis 10, **dadurch gekennzeichnet, dass** das Garn Metallfäden enthält.

FIG.1

FIG.2

FIG.3

FIG.4

EP 0 965 770 B2

FIG.5